(19) Europäisches Patentamt / European Patent Office / Office européen des brevets

(11) **EP 2 431 762 B1**

(12) **FASCICULE DE BREVET EUROPEEN**

(45) Date de publication et mention
de la délivrance du brevet:
**08.01.2014 Bulletin 2014/02**

(51) Int Cl.:
*G01S 13/44* <sup>(2006.01)</sup>        *G01S 13/78* <sup>(2006.01)</sup>
*G01S 7/03* <sup>(2006.01)</sup>          *G01S 7/282* <sup>(2006.01)</sup>

(21) Numéro de dépôt: **11182190.6**

(22) Date de dépôt: **21.09.2011**

(54) **Procédé pour allonger le temps d'éclairement de cibles par un radar secondaire**

Verfahren zur Verlängerung der Beleuchtungszeit von Zielen durch einen Sekundärenradar

Method for extending the time during which targets are lit by a secondary radar

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.09.2010 FR 1003751**

(43) Date de publication de la demande:
**21.03.2012 Bulletin 2012/12**

(73) Titulaire: **Thales**
**92200 Neuilly-sur-Seine (FR)**

(72) Inventeur: **Billaud, Philippe**
**91470 Limours (FR)**

(74) Mandataire: **Lucas, Laurent Jacques et al
Marks & Clerk France
Conseils en Propriété Industrielle
Immeuble Visium
22, Avenue Aristide Briand
94117 Arcueil Cedex (FR)**

(56) Documents cités:
**EP-A1- 0 053 512          EP-A1- 0 577 520
WO-A1-2010/049284      FR-A1- 2 918 804
US-A- 5 218 365            US-A- 5 302 953**

EP 2 431 762 B1

**Description**

L'invention concerne le domaine général des radars secondaires. Elle concerne plus particulièrement le processus d'interrogation d'aéronefs par un radar secondaire de type monopulse, en particulier pour des interrogations en mode S ou en mode IFF.

Les antennes qui équipent les radars secondaires (SSR) actuels sont généralement des antennes de grande taille (4 à 9 m de large) qui présentent classiquement 3 voies d'émission/réception: une voie dite "voie Somme" ou "voie Σ", une voie dite "voie Différence" ou "voie Diff" ou encore "voie Δ", et une voie complémentaire dite "voie de contrôle" ou "voie Cont" ou encore "voie Ω". De par leur conception ces antennes présentent une similitude de caractéristiques presque parfaite entre leurs caractéristiques en émission (à 1030 MHz) et en réception (à 1090 MHz). Ces antennes permettent avantageusement de réaliser des émissions sur l'une ou l'autre de ces voies.

De manière courante, la voie Σ est la seule voie exploitée par le radar pour implémenter les échanges entre les transpondeurs à bord des aéronefs et lui-même, notamment les échanges en modes S ou en mode IFF. La voie Δ est quant à elle simplement utilisée en réception pour implémenter la fonction d'écartométrie permettant de déterminer précisément l'azimut du transpondeur considéré. La voie Ω, quant à elle, permet d'identifier les signaux reçus par les lobes secondaires de la voie Σ et par suite de ne pas tenir compte de ces signaux (fonction de suppression des lobes secondaires ou "SLS").

Le brevet FR2918804 décrit un radar secondaire comportant une voie de réception correspondant au diagramme somme de l'antenne et une voie de réception correspondant au diagramme différence de l'antenne.

Le brevet EP0577520 correspondant au brevet US5302953 décrit une antenne de radar secondaire fonctionnant en mode S. L'antenne comprend en réception une voie somme Σ et une voie différence Δ, ainsi qu'une voie auxiliaire en réception permettant d'augmenter le temps d'éclairement et de complémenter le balayage effectué par la voie somme Σ.

Les documents US5218365 et EP0053512 décrivent des radars secondaires qui utilisent la voie différence Δ à l'émission pour émettre une impulsion de référence unique par la voie différence Δ au lieu de la voie Ω afin d'implémenter la fonction de suppression des lobes secondaires (SLS) sur l'antenne différence au lieu de l'antenne omnidirectionnelle Ω. Les documents US5218365 et EP0053512 ne suggèrent pas d'émettre des messages d'interrogations sur la voie différence.

S'agissant par ailleurs du fonctionnement en modes S ou en mode IFF de ces radars, les standards définis par l'Organisation de l'Aviation Civile Internationale ("OACI") notamment dans l'annexe 10, volume 4, de même que ceux correspondant à la norme STANAG 4193 (1ère partie) de l'OTAN définissent les signaux à rayonner pour obtenir la réponse du transpondeur d'un aéronef dans le lobe principal de l'interrogateur. On rappelle ici que le mode S correspond à un mode d'interrogation dédié concernant des aéronefs civils alors que le mode IFF est un mode d'interrogation dédié concernant les aéronefs militaires.

En mode S, le radar secondaire fonctionne en mode poursuite, à savoir que la position d'un aéronef donné (en azimut et distance), pour un tour d'antenne donné, est déterminée, prédite, par extrapolation de sa position antérieure déterminée lors de la détection de cet aéronef au tour précédent. En mode IFF, la position d'un aéronef donné (en azimut et distance), pour un tour d'antenne donné, peut-être fournie soit comme en mode S mais aussi à partir d'un autre senseur comme le radar primaire ou un senseur optronique par exemple.

Usuellement, les 3 voies d'antenne sont utilisées comme suit:

a) en ce qui concerne les émissions (à 1030MHz):

- la voie Σ est dédiée à l'interrogation au travers du lobe principal de l'antenne, en mode S ou en mode IFF, de tout transpondeur (i.e. de tout aéronef) localisé dans la zone couverte par le lobe principal.
- la voie "Cont", ou Ω, est employée pour bloquer les réponses des transpondeurs localisés dans une zone hors du lobe principal et cependant susceptibles de recevoir les interrogations émises sur la voie Σ par les lobes secondaires de cette voie. A cet effet un signal d'interrogation est émis par la voie "Cont" (fonction d'interrogation sur la voie SLS ou "ISLS").

b) en ce qui concerne les réceptions (à 1090MHz):

- la voie Σ est dédiée à la détection et au décodage au travers du lobe principal de l'antenne, en mode S ou en mode IFF, des réponses de tout transpondeur (i.e. de tout aéronef) localisé dans la zone couverte par le lobe principal.
- la voie Ω est employée pour rejeter les réponses des transpondeurs localisés dans une zone hors du lobe principal et dont les réponses sont reçues sur la voie Σ, par les lobes secondaires de cette voie (fonction de suppression des réponses par la voie SLS ou "RSLS").

-    la voie Δ est utilisée, pour le traitement Monopulse, afin de déterminer précisément dans le lobe principal le transpondeur à l'origine la réponse ainsi que pour implémenter la fonction "RSLS".

Il est à noter qu'en application des standards OACI et STANAG, la fonction ISLS est normalement mise en oeuvre par les avions en considérant les signaux radars reçus. Elle a pour effet que les transpondeurs répondent nécessairement si, pour l'azimut considéré:

$$G_{Somme} \cdot P_{Interrogation} - G_{Cont} \cdot P_{ISLS} \geq 9 \text{ dB}$$

où G est le gain de l'antenne à l'azimut de l'aéronef et P la puissance des interrogations émises sur Somme ($\Sigma$) et Contrôle ($\Omega$). Les transpondeurs ne répondent pas si:

$$G_{Somme} \cdot P_{Interrogation} - G_{Cont} \cdot P_{ISLS} < 0 \text{ dB}$$

Entre les 2 seuils (0 dB et 9 dB) et selon les standards appliqués, le transpondeur peut répondre ou peut ne pas répondre. Considérant les écarts situés entre 0 dB et 9 dB on parle ainsi communément de "zone grise".
Il est également à noter que, de manière similaire, la fonction RSLS est mise en oeuvre par le radar, en considérant les signaux reçus du transpondeur considéré.
Elle a pour effet que les réponses reçues pour l'azimut considéré sont considérées comme reçues par les lobes secondaires de la voie Somme et par suite éliminées, si:

$$G_{Somme} - G_{Cont} \leq Seuil\_RSLS_{Cont}$$

Elle a également pour effet que les réponses reçues pour l'azimut considéré sont considérées comme provenant de transpondeurs localisés hors de l'arc de réception permettant le traitement monopulse et par suite éliminées, si:

$$G_{Somme} - G_{Cont} \leq Seuil\_RSLS_{Diff}$$

Par suite, l'arc d'interrogation effectif du radar (1030MHz), qui correspond à la zone de l'espace dans laquelle le transpondeur est en mesure de répondre, est donc limité:

-    pour les avions proches, par la mise en oeuvre de la fonction ISLS (décrite ci-dessus);
-    pour les avions lointains, par le franchissement par les signaux d'interrogations provenant du radar du seuil de sensibilité du récepteur du transpondeur, franchissement défini pour l'azimut considéré, par:

$$G_{Somme} \cdot P_{interrogation} - Pertes \geq Seuil\_Sensibilité\_Transpondeur ,$$

les Pertes mentionnée étant principalement dues aux pertes consécutives à la propagation des signaux entre le radar et l'aéronef.
Il est à noter que la formule énoncée ci-dessus est une formule simplifiée destinée à mettre en évidence le rôle du Gain de l'antenne du radar.
De même, l'arc de réception (1090MHz) effectif du radar, qui correspond à la zone dans laquelle les réponses du transpondeur vont être traitées par le radar, est quant à lui limité:

-    pour les avions proches, par la mise en oeuvre de la fonction RSLS (décrite ci-dessus)
-    pour les avions lointains, par le franchissement par les signaux correspondant aux réponses du transpondeur du seuil de sensibilité du récepteur du radar, franchissement défini pour l'azimut considéré par:

$$G_{Somme} \cdot P_{réponses} - Pertes \geq Seuil\_Sensibilité\_radar.$$

Pour les avions lointains, les considérations précédentes conduisent souvent en pratique, dans le contexte d'une configuration radar longue portée, à ce que les signaux échangés ne sont exploités aussi bien par le transpondeur que par le radar que lorsque le gain G de l'antenne pour l'azimut de la cible vis à vis du gain maximum de l'antenne est telle que:

$$G_{max} - G \leq 4\,dB$$

Ainsi, en particulier dans un fonctionnement en mode S ou en mode IFF, le mode d'exploitation des différentes voies du radar secondaire décrit précédemment induit, dans le cadre des échanges d'informations entre le radar et les différents transpondeurs, des limitations dans l'exploitation des signaux en émission et en réception. Celles-ci ont pour conséquence que pour un transpondeur donné, les fonctions d'interrogation et de réponse ne trouvent temporellement leur place que pendant un intervalle de temps défini par une ouverture angulaire correspondant à une fraction du diagramme de la voie $\Sigma$ classiquement appelé éclairement de la cible. En dehors de cet intervalle les interrogations et les réponses sont invalidées ou ne sont pas considérées.

De nos jours, ces limitations de fonctionnement s'avèrent être de plus en plus incompatibles des contraintes opérationnelles supportées par les radars secondaires en charge du contrôle du trafic aérien, comme pour les radars militaires en charge de l'identification IFF.

En effet, pour satisfaire le besoin de rapprochement des avions nécessaire suite à la densité croissante d'aéronefs, on est contraint de faire tourner les antennes des radars de plus en plus vite afin de réduire le temps mort entre deux pointages du lobe d'antenne dans un même azimut et par suite entre deux détections successives d'un même aéronef en réduisant ainsi l'incertitude sur la position d'un aéronef entre deux tours d'antenne. Un tel accroissement de la vitesse de rotation d'antenne, a pour effet de réduire encore l'intervalle de temps pendant lequel un radar secondaire peut échanger des informations avec un aéronef donné, intervalle de temps encore appelé temps d'éclairement de la cible considérée.

Par ailleurs, du fait de la densité croissante d'aéronefs également, les radars secondaires civils fonctionnant en mode S doivent gérer sélectivement la route d'un nombre croissant d'aéronefs et doivent en outre, en mode EHS en particulier, permettre l'échange d'une quantité croissante de données avec ceux-ci, données dénommées "commB Data Selector registers" (ou "BDS registers") selon la terminologie anglo-saxonne en vigueur. Les "BDS" sont numérotés en fonction des registres du transpondeur, lesquels contiennent des données du vol. On distingue ainsi, par exemple, le BDS40 (aircraft intention), le BDS50 (track and turn report) ou encore le BDS60 (heading and speed report).

De leur côté, les radars militaires nécessitent en outre:

- soit un nombre toujours plus important d'interrogations et de réponses pour chaque aéronef interrogé, de façon à résister à des systèmes de brouillage et d'intrusion toujours plus performants,
- soit un temps d'éclairement sur la cible toujours croissant, pour capter des réponses à fort délai de réponse requis par les nouveaux modes d'identification IFF.

Ces limitations croissantes, engendrent des contraintes de moins en moins compatibles avec le fonctionnement actuel des radars secondaires.

Un but de l'invention à résoudre les problèmes évoqués précédemment en proposant d'augmenter de manière substantielle, voire à doubler, le temps d'éclairement d'une cible d'un radar secondaire à antenne tournante dans chaque direction de l'espace. Un autre but de l'invention consiste à réaliser consiste à assurer cet accroissement sans nécessiter de modification substantielle de la structure du radar et, en particulier, sans nécessiter de modification de l'antenne ni des moyens de formation des voies.

A cet effet l'invention a pour objet un radar secondaire du type comportant une antenne présentant un diagramme de rayonnement formant une voie Somme, un diagramme de rayonnement formant une voie Différence et un diagramme formant une voie Contrôle, comportant également des moyens pour générer des messages d'interrogations "voie Somme" et des messages d'interrogation ISLS "voie Contrôle" et des moyens pour émettre ces messages respectivement par les voies Somme et Contrôle de l'antenne ainsi que des moyens pour assurer la réception et le traitement des signaux radioélectriques reçues par les voies Somme, Contrôle et Différence configurés pour détecter les réponses d'aéronefs sur les signaux reçues par la voie Somme de l'antenne et réaliser un traitement monopulse et un traitement SLS sur ces réponses en utilisant les signaux reçus par les voies Différence et Contrôle de l'antenne.

Selon l'invention les moyens pour générer des messages d'interrogations sont configurés pour générer également des messages d'interrogations "voie Différence" et les moyens d'émission sont configurés pour pouvoir émettre ces messages par la voie Différence de l'antenne. Les moyens pour générer des messages d'interrogations comportent des moyens pour gérer la transmission de chaque message d'interrogation vers la voie d'émission correspondante. Les moyens pour assurer la réception et le traitement des signaux radioélectriques reçus par les voies Somme, Contrôle et Différence sont en outre configurés pour détecter les réponses d'aéronefs sur les signaux reçues par la voie Différence de l'antenne. Les moyens sont par ailleurs configurés et agencés de sorte que, pour un instant donné, les transactions entre le radar et un aéronef donné peuvent être effectuées soit par la voie Somme de l'antenne du lobe d'antenne, soit par la voie Différence, soit encore par les deux voies, selon la position de la cible dans le lobe d'antenne à l'instant considéré.

Selon un premier mode de réalisation de l'invention, les moyens pour générer les messages d'interrogations étant configurés pour pouvoir délivrer simultanément aux moyens d'émission deux messages identiques ou distincts, les moyens d'émission comportent deux voies d'émission distinctes, une voie d'émission étant dédiée à l'émission d'un des messages par la voie Somme du lobe d'antenne et l'autre étant dédiée à l'émission de l'autre message sur la voie Différence du même lobe d'antenne.

Selon un deuxième mode de réalisation de l'invention, les moyens pour générer les messages d'interrogations étant configurés pour pouvoir délivrer alternativement des messages "voie Somme" et des messages "voie Différence" aux moyens d'émission, les moyens d'émission comportent des moyens unique pour transformer le message délivré en un signal radioélectrique et des moyens de commutation pour diriger le signal produit sur celle des voies d'antenne, voie Somme ou Voie Différence, qui correspond à la nature du message délivré.

Selon un troisième mode de réalisation de l'invention, les moyens pour générer les messages d'interrogations étant configurés pour pouvoir délivrer alternativement ou simultanément des messages identiques "voie Somme" et des messages "voie Différence" aux moyens d'émission, les moyens d'émission comportent des moyens unique pour transformer le message délivré en un signal radioélectrique ainsi que des moyens de commutation configurés pour diriger le signal produit soit sur la voie Somme de l'antenne, soit sur la voie Différence, soit sur les deux voies.

Les caractéristiques et avantages de l'invention seront mieux appréciés grâce à la description qui suit, description qui s'appuie sur les figures annexées qui montrent:

- la figure1, un synoptique simplifié de la structure d'un radar secondaire actuel;
- la figure 2, des représentations graphiques illustrant les limites des radars secondaires actuels en termes de temps d'éclairement des cibles;
- la figure 3 un synoptique simplifié de la structure d'un radar secondaire selon l'invention;
- la figure 4, des représentations graphiques illustrant l'accroissement du temps d'éclairement des cibles obtenu par mise en oeuvre d'un radar secondaire selon l'invention;
- la figure 5, un schéma de principe simplifié présentant la structure des moyens d'émission d'un radar secondaire selon l'état de l'art;
- les figures 6 à 8, des schémas de principe simplifiés présentant la structure des moyens d'émission d'un radar secondaire selon l'invention conformes à trois variantes de mises en oeuvre;
- la figure 9, un synoptique illustrant la manière dont est réalisé le séquencement des interrogations en mode S dans un radar secondaire fonctionnant selon l'état de l'art.
- la figure 10, un synoptique illustrant la manière peut être réalisé le séquencement des interrogations en mode S dans un radar secondaire fonctionnant selon l'invention;
- les figures 11 et 12, des illustrations présentant un exemple d'application simple mettant en évidence le caractère avantageux de l'invention en termes d'accroissement du nombre de transactions pouvant être effectuées par un radar secondaire.
- les figure 13 et 14, des synoptiques présentant le séquencement des interrogations effectuées par un radar secondaire dans la structure actuelle, dans le cas d'une demande d'identification IFF d'une cible détectée par un radar primaire.
- les figures 15 et 16, des synoptiques présentant le séquencement des interrogations effectuées par un radar secondaire selon l'invention, dans le cas d'une demande d'identification IFF d'une cible détectée par un radar primaire.

Il est à noter que dans les différentes figures un même élément fonctionnel est repéré par un même repère numérique.

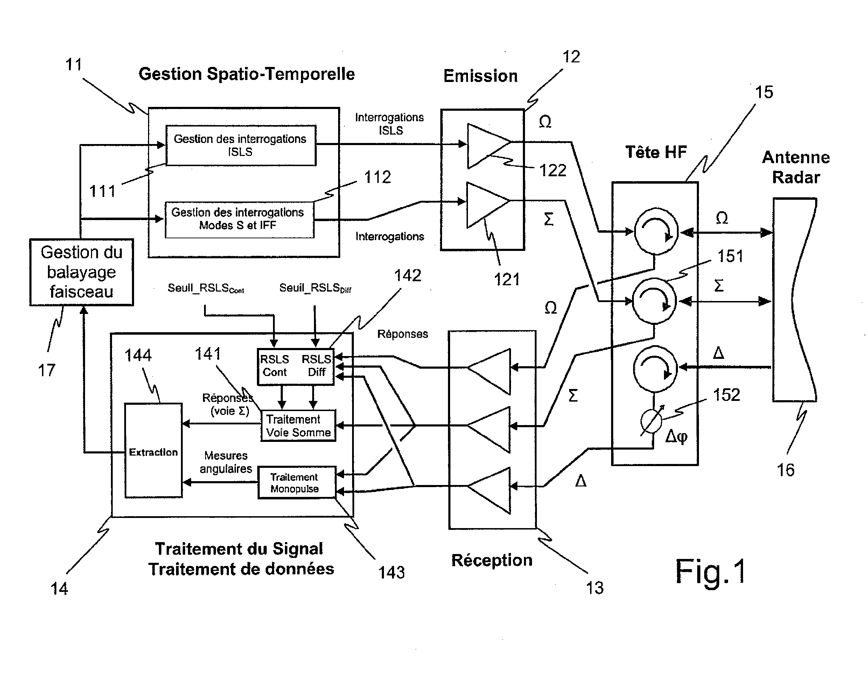

Comme le montre le synoptique de la figure 1, l'architecture d'un radar secondaire actuel fonctionnant en modes S et/ou IFF est décomposable en différents blocs fonctionnels parmi lesquels on distingue :

- La Gestion Spatio-temporelle 11 (GST), qui gère notamment l'envoi des messages d'interrogations SSR en Mode S ou en mode IFF en prenant en compte les taches radar à effectuer concernant les cibles dont la présence dans le faisceau d'antenne (lobe principal) est prédite à partir de la prise en compte des événements passés;

- L'Emetteur 12 (TX), qui convertit les messages d'interrogations en signaux RF de forte puissance à une fréquence F1 (1030 MHz), et transmet ces signaux pour leur rayonnement par l'antenne;
- Le Récepteur 13 (RX), qui démodule les signaux RF reçus par l'antenne à une fréquence F2 proche de F1 (1090 MHz);
- Le processeur de traitement du signal 14 (SP) qui traite les signaux provenant du récepteur et qui détecte et décode les réponses reçues dans le lobe principal de l'antenne;
- La tête HF 15 (RF) qui assure l'aiguillage des signaux entre l'émetteur, le récepteur et l'antenne, autrement dit qui assure le transfert des signaux d'interrogation produits par l'émetteur vers l'antenne et assure le transfert des signaux des réponses reçus par l'antenne vers le récepteur, cet aiguillage étant réalisé pour les 3 diagrammes ($\Sigma$, $\Omega$, $\Delta$), ou voies, d'émission et de réception. A cet effet, la tête HF 15, comporte principalement;
- Des circulateurs 151 qui permettent d'aiguiller les signaux produits par l'émetteur vers l'antenne et ceux reçus par l'antenne vers le récepteur; selon les principes de réalisation retenues par les concepteurs du radar existant, le circulateur sur la voie Différence peut ne pas être présent puisqu'il n'est pas nécessaire de séparer émission de réception : les signaux étant uniquement en réception. Néanmoins, un circulateur est généralement présent sur voie Différence comme sur la voie Somme ce qui permet d'obtenir une meilleure symétrie pour la fonction monopulse.
- Un déphaseur 152 qui permet la mise en phase des signaux reçus sur les voies de réception $\Sigma$ (voie Somme) et $\Delta$ (voie Différence) pour le traitement monopulse. La fonction déphaseur est représentée pour ce synoptique dans la tête HF mais elle pourrait tout aussi bien être située dans la fonction réception.
- L'antenne 16 qui assure le rayonnement par les voies $\Sigma$ et $\Omega$, des signaux produits par l'émetteur, signaux de fréquence F1 (1030MHz) qui portent les messages d'interrogations générés par le radar (par la gestion spatio-temporelle) et la captation, par les différentes voies ($\Sigma$, $\Omega$, $\Delta$), des signaux réponses de fréquence F2 (1090MHz) transmis par les transpondeurs localisés à bord des aéronefs.

Les radars secondaires actuels sont très généralement configurés pour exploiter de manière classique les diagrammes d'antennes.

Du point de vue de l'émission, seules les voies Somme (voie $\Sigma$) et Contrôle (voie $\Omega$) sont exploitées. A cet effet le processeur de Gestion Spatio-temporelle (GST) du radar (11) comporte des moyens 111, 112 pour élaborer les interrogations sur les deux voies et ainsi de provoquer les réponses des aéronefs éclairés par le lobe principal de l'antenne.

Du point de vue de la réception, les voies Somme (voie $\Sigma$) et Contrôle (voie $\Omega$) sont exploitées pour la détection des réponses transmises par les aéronefs éclairés par le lobe principal, de la voie Somme de l'antenne, et la voie Différence (voie $\Delta$) pour le fonctionnement "monopulse" d'affinage de la localisation de ces cibles en azimut. A cet effet le processeur de traitement du signal et de traitement de données du radar (14) comporte en particulier des moyens (141, 142) appropriés pour réaliser la détection des réponses portées par le signal reçu sur la voie Somme (voie $\Sigma$), ainsi que des moyens (143) pour effectuer le traitement monopulse à partir des signaux reçus sur les voies $\Sigma$ et $\Delta$ (voie Différence).

Il est à noter que, de manière connue, décrite notamment dans le brevet français 0311893 intitulé "Procédé de pré-détection de réponses dans un radar secondaire et application à la détection de réponses mode S" et délivré le 03/02/2006, un radar secondaire peut être configuré de façon à exploiter également les signaux reçus par la voie Différence (voie $\Delta$) pour améliorer la détection, en particulier en cas de garbling dans le lobe principal (enchevêtrement des réponses dans le lobe principal), en réalisant la détection des réponses transmises par les aéronefs à partir de ces signaux reçus. Dans une telle configuration, non illustrée ici, le processeur de traitement du signal 14 qui traite les signaux provenant du récepteur détecte et décode les réponses reçues par le lobe principal de l'antenne par la voie $\Sigma$ ainsi que par la voie $\Delta$.

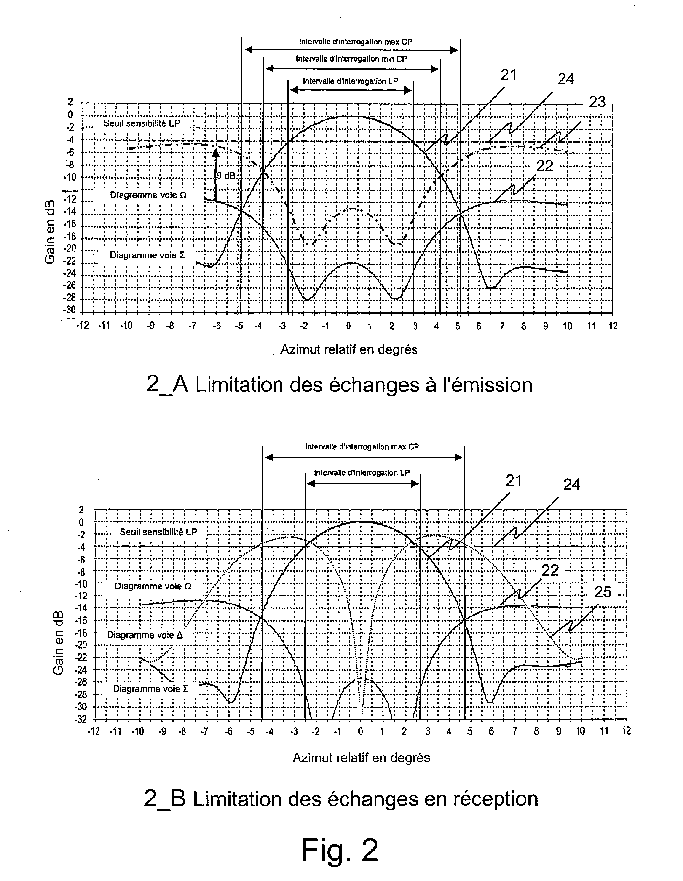

Avec une telle architecture les radars secondaires actuels sont contraints, comme il a été dit précédemment et compte tenu de l'existence de lobes secondaires sur le lobe principal de l'antenne (voie Somme) et de la limite de sensibilité des transpondeurs, de réaliser l'ensemble des opérations d'interrogation demandées dans un azimut donné pendant l'intervalle de temps où l'azimut en question est balayé par le lobe principal de faisceau d'antenne voie Somme et seulement pendant cet intervalle de temps correspondant à l'éclairement de la cible. Les représentations 2_A et 2_B de la figure 2 illustrent cette limitation à l'émission (2_A) et en réception (2_B) à partir des courbes représentatives des diagrammes 21, 22 et 25 correspondants respectivement aux voies $\Sigma$, $\Delta$ et $\Omega$, et du seuil de sensibilité minimum 24 des transpondeurs en émission et du radar en réception.

Comme il a été dit précédemment, le but du brevet consiste à protéger une architecture permettant d'allonger très sensiblement, voire à pratiquement doubler, le temps d'éclairement d'une cible pour un radar secondaire à antenne rotative dans un azimut donné, et ce, sans modification de l'aérien.

Pour réaliser cette performance, le fonctionnement et la structure classique d'un radar secondaire sont modifiés de façon à:

- émettre également des messages d'interrogations par la voie Différence (classiquement utilisé seulement en réception pour la fonction monopulse en centre lobe principal d'antenne);

- réaliser également la détection des réponses transmises à partir des signaux reçus par la voie Différence;
- gérer les voies d'émission du radar et particulier déterminer pour chaque message d'interrogation sur quelle voie d'émission (voie Somme et/ou voie Différence) selon la nature de l'interrogation et la position prédite/détectée de la cible destinataire à l'instant considéré c'est à dire le fait qu'elle puisse être éclairée par le lobe d'antenne constituant la voie Somme et/ou par les lobes d'antenne constituant la voie Différence.

Selon l'invention les principes de mesures des niveaux relatifs des signaux reçus sur les voies $\Sigma$ et $\Omega$, qui régissent l'émission de réponses de la part des transpondeurs (ISLS), principes décrits précédemment, s'appliquent de manières identiques pour régir l'émission de réponses de la part des transpondeurs (ISLS) à partir des signaux émis sur la voie $\Delta$.

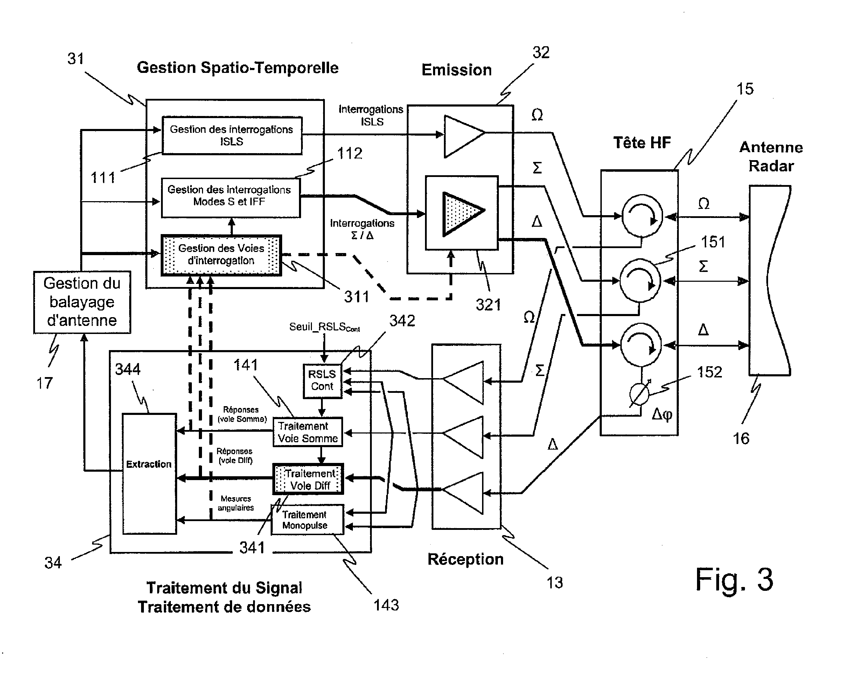

La figure 3 présente le synoptique structurel de l'architecture radar secondaire selon l'invention. Comme on peut le constater, l'architecture proposée consiste en une architecture classique, telle que celle décrite précédemment, à laquelle de nouveaux éléments ont été incorporés.

Ainsi, selon l'invention, l'émetteur 32 comporte des moyens 321 pour permettre l'émission par la voie Somme (voie $\Sigma$) et/ou par la voie Différence (voie $\Delta$), à la fréquence F1 (1030MHz), des signaux RF portant des messages d'interrogations transmis par le radar.

De même le processeur (SP) de traitement du signal et de traitement de données comporte outre, de manière connue, les moyens 141 pour assurer le traitement des signaux reçus à la fréquence F2 (1090 MHz) par la voie $\Sigma$, des moyens 341 pour assurer le traitement des signaux reçus à la fréquence F2 (1090 MHz) par la voie $\Delta$ et détecter des réponses transmises par des transpondeurs localisés à bord d'aéronefs.

De même encore, la Gestion Spatio-temporelle 31 comporte ici des moyens 311 de gestion des interrogations et des voies. Ces moyens permettent de décider, pour la période d'écoute suivante, de la voie (voie $\Sigma$ et/ou voie $\Delta$) sur laquelle une interrogation en mode S ou en mode IFF donnée devra être transmise à l'instant considéré de cette période. A cet effet ils prennent en compte les détections effectuées sur la voie $\Sigma$, celles effectuées sur la voie $\Delta$, ainsi que la mesure angulaire relative à chaque détection et les informations délivrées par les moyens 17 de gestion du balayage du faisceau d'antenne. Par suite, selon le mode de réalisation envisagé, la gestion temporelle comporte des moyens pour générer et délivrer aux moyens d'émission soit des messages d'interrogations destinés à être émis pas la voie Somme de l'antenne, ou message "voie Somme", soit des messages d'interrogations destinés à être émis pas la voie Différence de l'antenne, ou message "voie Différence" soit par les deux voies d'antenne simultanément.

Selon l'invention, les réponses détectées au niveau de la voie Différence (voie $\Delta$) par le processeur SP sont prises en comptes par les moyens d'extraction 344 en complément de celles détectées au niveau de la voie Somme (voie $\Sigma$) ces informations étant mises en cohérence avec les informations produites par le traitement monopulse. De la sorte, un plot radar, correspondant à la réponse transmise par un aéronef, peut-être détecté sur le signal issue de la voie $\Sigma$ ou sur le signal issu de la voie $\Delta$, ou simultanément sur ces deux signaux. A cet effet, l'extracteur conventionnel subit une légère évolution qui consiste à étendre la taille d'un plot en azimut, à prendre en compte les réponses provenant du signal reçu par la voie Différence et à fusionner les réponses doubles provenant simultanément des signaux des voies Somme et Différence (pour la même période d'éclairement dans le même tour d'antenne).

Il est à noter que dans la nouvelle architecture selon l'invention, comme l'illustre la figure 3, la fonction RSLS-DIFF est naturellement supprimée. En revanche, la fonction RSLS-CONT est appliquée aussi aux réponses détectées sur la voie Différence. De cette façon les réponses de transpondeurs reçues par la voie de réception $\Delta$ ne sont pas supprimées dans la mesure où elles ont un niveau supérieur au niveau du signal correspondant mesuré sur la voie de réception Cont. Par suite les moyens de détection de seuils différentiés 142 appliqués à la seule voie de détection $\Sigma$ implémentée dans la structure connue illustrée par la figure 1 (RSLS-Diff et RSLS-Cont) sont remplacés par des moyens de détection de seuil 342 dont l'action s'applique sur les deux voies de réception $\Sigma$ et $\Delta$ implémentées dans la structure selon l'invention, comme l'illustre la figure 3.

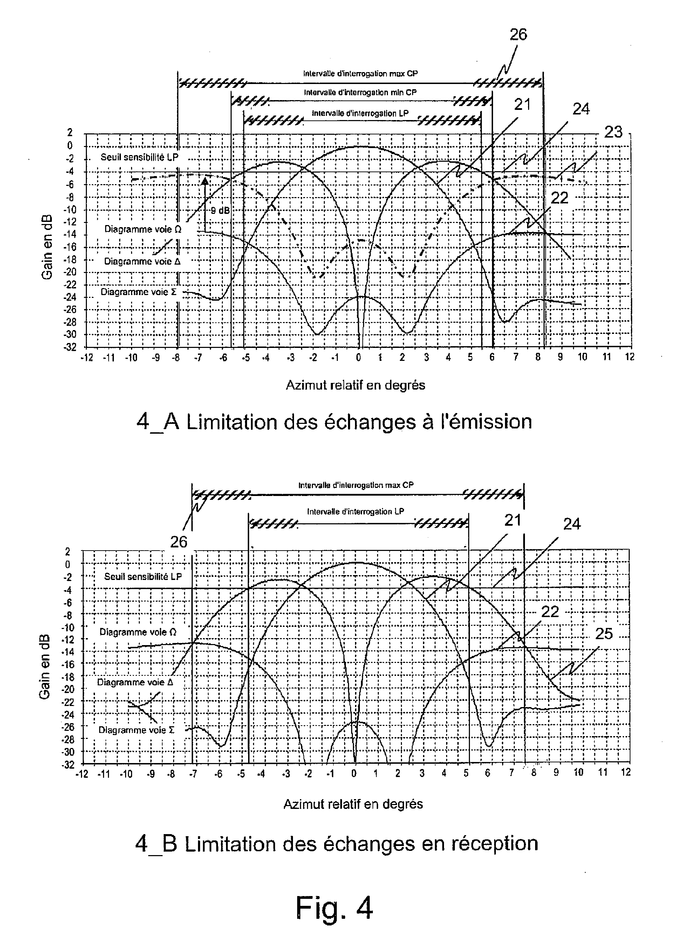

Ainsi, en rendant possible l'utilisation de la voie Différence pour émettre des messages d'interrogations et pour détecter les réponses transmises par des transpondeurs, l'architecture selon l'invention permet avantageusement d'augmenter très sensiblement, voire de doubler dans certains cas, le temps pendant lequel un radar secondaire à antenne tournante éclaire un azimut donné à chaque tour d'antenne, et ce, sans modifier l'antenne. Le temps d'éclairement disponible étant ainsi accru, il est possible au radar secondaire pour une direction donnée (i.e. pour un azimut donné) soit d'interroger un plus grand nombre d'aéronefs à chaque tour d'antenne (mode S), soit d'effectuer un plus grand nombre de transactions de données de type EHS (BDS) avec les aéronefs à chaque tour d'antenne (mode S), soit de disposer de plus de temps pour interroger un même aéronef (mode IFF). Les zones hachurées 26 des représentations 4_A et 4_B de la figure 4 illustrent cette augmentation possible du temps d'éclairement en assouplissant les contraintes à l'émission (4_A) et en réception (4_B). Les représentations 4_A et 4_B de la figure 4 renvoient respectivement aux représentations 2_A et 2_B de la figure 2.

D'un point de vue matériel, les modifications apportées aux différents éléments d'un radar secondaire concernés par la réalisation d'un temps d'éclairement plus long ainsi que par l'exploitation de cet allongement du temps d'éclairement, sont décrites dans la suite du texte. Elles portent principalement sur des modifications de la structure des moyens d'émission 12, des moyens de gestion spatiotemporelle 11 et des moyens de traitement du signal et de traitement de données 14.

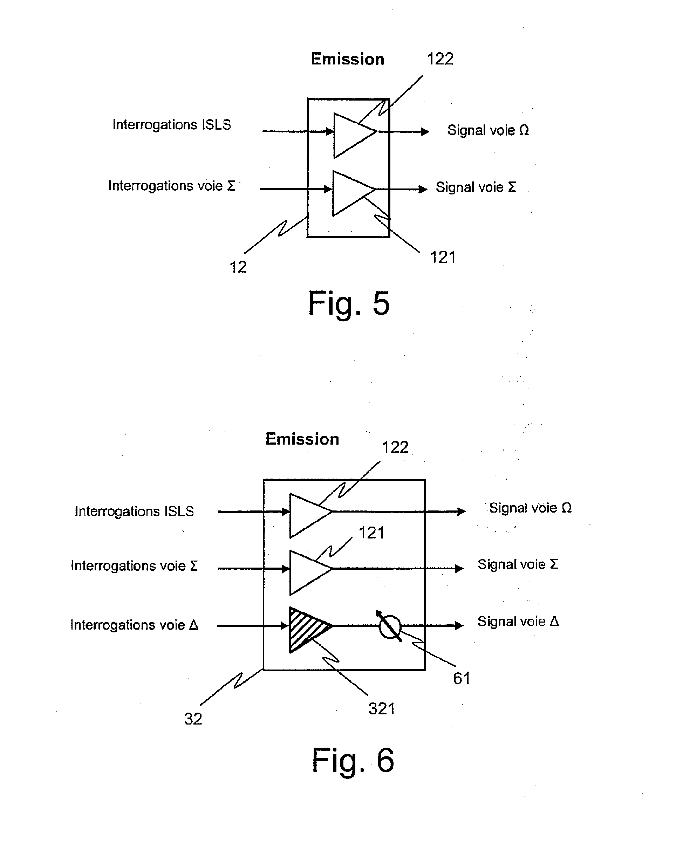

Du point de vue de la fonction d'émission, la mise en place de moyens permettant au radar de transmettre des messages d'interrogations peut faire l'objet de différentes formes de réalisation alternatives qui peuvent être implémentées sur les moyens d'émission 12 tels qu'ils existent généralement dans un radar secondaire, illustrés de manière schématique par la figure 5.

Dans une configuration classique, l'émetteur 12 comporte notamment deux voies d'amplification de puissance distinctes 121, 122 permettant d'alimenter simultanément les voies Somme (voie Σ) et Contrôle (voie Ω) de l'antenne 16 nécessaires pour réaliser l'émission des messages d'interrogations proprement dite ainsi que l'émission du signal d'interrogation (ISLS), permettant de réaliser la fonction ISLS de la voie Somme (voie Σ). Par suite, en se basant sur la structure existante, il est possible, pour réaliser l'émission des messages d'interrogations sur la voie Différence (voie Δ) de l'antenne 16, de mettre en oeuvre différentes modifications d'architecture, plus ou moins sophistiquées. Ces modifications d'architectures correspondent à des variantes de réalisation de l'invention, dont on présente trois exemples dans la suite du texte. Ces trois exemples non limitatifs de l'invention, correspondent à des variantes de réalisation concurrentes possibles.

Ainsi, dans une première variante de réalisation, illustrée par la figure 6, il est possible de modifier la structure existante en ajoutant simplement une voie d'émission autonome 321, dédiée aux messages d'interrogations destinés à être émis par la voie Différence, aux deux voies d'émission 121 et 122 existantes.

Cette solution, présentée sur la figure 3, est d'une mise en oeuvre simple dans la mesure où elle ne touche pas à la structure existante, la voie additionnelle 321 étant mise en oeuvre indépendamment des deux voies conventionnelles 121 et 122. En outre, dans la mesure où les moyens 31 pour générer les message d'interrogation sont configurés de façon à pouvoir délivrer simultanément deux message d'interrogation distinct ou identique sur deux canaux différents aux moyens d'émission, cette solution permet de transmettre simultanément des messages d'interrogations soit identiques soit différentes sur les voies Somme (voie Σ) et Différence (voie Δ), et ce à pleine puissance sur chaque voie. Cependant elle s'avère d'une mise en oeuvre coûteuse, dans la mesure où aucun élément constituant la voie d'amplification ajoutée n'étant mis en commun avec les voies existantes, elle nécessite une évolution matérielle importante. Par ailleurs, dans une telle mise en oeuvre, comme l'illustre la figure 3, les moyens réalisant la Gestion spatiotemporelle 31 du radar comporte des moyens 311 pour permettre le transfert vers les moyens d'émission 32, par deux canaux différents, des messages d'interrogations destinés à la voie Somme (messages "voie Somme") d'une part et à la voie Différence (messages "voie Différence") d'autre part. Selon l'invention, ces messages peuvent être identiques ou différents.

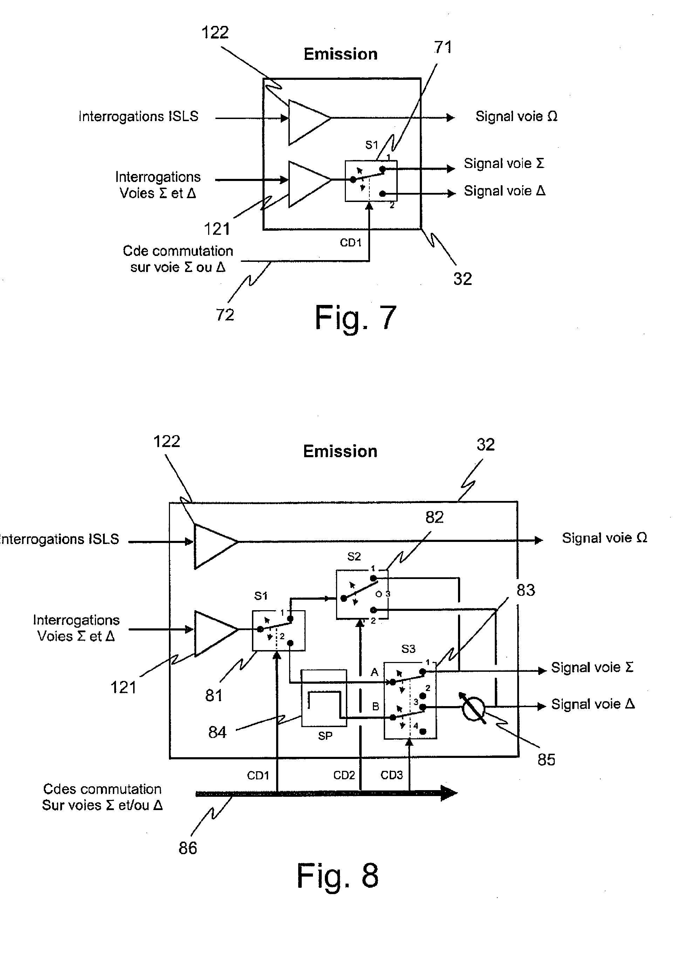

Une deuxième variante de réalisation, illustrée par la figure 7, s'avère d'une mise en oeuvre matérielle moins coûteuse. Il s'agit dans ce cas de transmettre les messages d'interrogations alternativement sur la voie Somme (voie Σ) ou sur la voie Différence (voie Δ). Pour ce faire, on insère un commutateur hyperfréquence de puissance 71 en sortie de la chaîne d'amplification 121 initialement dédiée, dans l'architecture connue, à la seule voie Somme (voie Σ), le commutateur 71 étant lui-même commandé par un signal de commande 72 délivré par les moyens réalisant la Gestion spatiotemporelle 31 du radar.

Cette deuxième variante présente l'avantage d'être d'une mise en oeuvre matérielle peu couteuse car exploitant un maximum des fonctions d'émission existantes. En effet, elle ne nécessite que l'ajout d'un commutateur hyperfréquence 71 au niveau des moyens d'émission 12 du radar, et la production d'un signal de commande 72 au niveau des moyens 311 du sous-ensemble réalisant la Gestion spatiotemporelle 31 du radar. Le signal de commande est ici déterminé en fonction de la voie sur laquelle le message d'interrogation considéré doit être émis.

En revanche, par rapport à la première variante, elle s'avère limitative en termes de fonctionnement. En effet, une telle variante ne permet pas d'émettre simultanément des messages d'interrogation identiques ou distincts, ou encore d'autres signaux, sur les voies Somme (voie Σ) et Différence (voie Δ), de sorte qu'à un instant donné on ne peut émettre que sur une des voies d'antenne. Par ailleurs, l'insertion d'un commutateur se traduit par une certaine perte de puissance à l'émission et une baisse des performances en termes de portée du radar après mise en oeuvre de l'invention. Cependant, cette baisse de puissance étant relativement modeste, cette variante de réalisation économique peut être avantageusement envisagée, notamment lorsque la réduction de portée maximale du radar reste faible.

Une troisième variante de mise en oeuvre, consiste à adopter le schéma intermédiaire illustré par la figure 8. Selon cette variante de réalisation, la modification à apporter à la structure connue des moyens d'émission 12, un dispositif de commutation tel que celui illustré par la figure 8. Ce dispositif comporte trois commutateurs S1, S2 et S3, ainsi qu'un élément diviseur de puissance SP, un coupleur hyper fréquence par exemple.

Le commutateur S1, 81, est un commutateur hyperfréquence de puissance à une voie d'entré et à deux positions exclusives donnant accès à deux voies de sortie dont chacune est reliée à l'entrée de l'un des deux autres commutateurs hyperfréquence de puissance S2 et S3. S1 est commandé par un signal de commande CD1 délivré par le sous-ensemble réalisant la Gestion spatiotemporelle 31 du radar.

Le commutateur S2, 82, est un commutateur hyperfréquence de puissance à une voie d'entré et à trois positions exclusives donnant accès à deux voies de sortie, une position correspondant à isolement électrique de l'entrée, position pour laquelle le signal présent à l'entrée n'est relié à aucune des voies de sortie. S2 est commandé par un jeu de signaux de commande CD2 délivré par le sous-ensemble réalisant la Gestion spatiotemporelle 31 du radar.

Le commutateur S3, 83 est, quant à lui, un commutateur hyperfréquence de puissance double, comportant deux commutateurs distincts inter-verrouillés. Chaque commutateur est un commutateur à une voies d'entré et à deux positions exclusives donnant accès à une voie de sortie, une position correspondant à isolement électrique de l'entrée, position pour laquelle le signal présent à l'entrée n'est pas relié à la voie de sortie.

Le commutateur S3 est commandé par un signal de commande CD3 délivré par le sous-ensemble réalisant la Gestion spatiotemporelle 31 du radar.

Selon l'invention, comme l'illustre la figure 8, l'entrée du commutateur S1 est relié à la sortie de la chaine d'amplification 121 initialement dédiée, dans l'architecture connue, à la seule voie Somme. Une des sorties du commutateur S1 est reliée à l'entrée du commutateur S2, tandis que l'autre sortie est relié à l'entrées d'un diviseur hyperfréquence SP, 84, dont chacune des deux sorties est reliée à une des entrées du commutateur S3. En outre, chacune des voies de sortie du commutateur S2 est reliée à l'une des voies de sortie du commutateur S3, de façon à constituer les sorties "voie Somme (voie $\Sigma$)" et "voie Différence (voie $\Delta$)" des moyens d'amplification 32.

Comme la deuxième variante décrite précédemment, cette troisième variante de réalisation présente l'avantage d'être d'une mise en oeuvre matérielle relativement peu couteuse. En effet elle ne nécessite que l'ajout des commutateurs hyperfréquence 81, 82, 83 au niveau des moyens d'émission 12 du radar, et la production de signaux de commande CD1, CD2 et CD3 au niveau des moyens 311 du sous-ensemble réalisant la Gestion spatiotemporelle 31 du radar, ces signaux étant délivrés sous la forme d'un bus de commande 86, par exemple.

Cette troisième variante de mise en oeuvre est en outre moins limitative que la deuxième variante car comme l'illustre la figure 8, elle permet d'adopter diverses configurations des différents commutateurs qui permettent de transmettre des messages d'interrogations sur les voies Somme (voie $\Sigma$) et Différence (voie $\Delta$), soit alternativement, soit simultanément. Elle se rapproche ainsi d'un point de vue fonctionnel de la première variante de mise en oeuvre, tout en présentant l'avantage d'un coût de réalisation moindre. Cependant, dans le cas d'une transmission simultanée de messages d'interrogations sur les deux voies, il est à noter qu'à la différence de ce qui se passe pour la première variante de réalisation, les messages d'interrogations transmis simultanément sont identiques sur les deux voies. Par ailleurs, en cas de transmission simultanée, il est également à noter qu'à la différence de ce qui se passe pour la première variante de réalisation, la puissance des signaux portant les messages d'informations sur chacune des voies voit sa puissance limitée à la moitié de la puissance délivrée par la l'élément d'amplification 121 dans sa configuration initiale.

Il est à noter que pour la première et la troisième variante de réalisation, un mode de réalisation particulier intègre sur la voie Différence un un élément déphaseur 61 ou 85, un déphaseur commandable par exemple, dont la fonction est de permettre, en cas d'émission de signaux sur les voies Somme (voie $\Sigma$) et Différence (voie $\Delta$) simultanément, une mise en phase des signaux rayonnés afin d'assurer leur bonne recombinaison dans l'espace.

Du point de vue des moyens de traitement du signal et du traitement de données (extraction - pistage), les modifications apportées aux équipements connus consiste en la mise en place d'une chaine 341 de traitement des signaux transmis par des transpondeurs et reçus par la voie Différence (voie $\Delta$ ).

Selon l'invention la chaine 341 de traitement des signaux reçus par la voie Différence (voie $\Delta$) implémente des fonctions similaires à celles implémentées par la chaine 141 de traitement des signaux reçus par la voie Somme. Ces fonctions de traitement, connues par ailleurs, ne sont pas détaillées ici. Par suite, en réception, la voie de Différence (voie $\Delta$) est utilisée à la fois pour implémenter classiquement le traitement monopulse 143 et pour implémenter le traitement de détection de réponses provenant d'aéronefs interrogés par le radar, ce traitement étant réalisé en parallèle du traitement existant 141 réalisé sur le signal reçu par la voie Somme (voie $\Sigma$).

Comme il a été dit précédemment, la voie de réception Différence (voie $\Delta$) étant exploitée pour la détection des réponses transmises par des transpondeurs, la fonction RSLS-DIFF qui procède par comparaison du niveau de signal reçu par la voie Différence (voie $\Delta$) et du signal reçu par la voie Somme (voie $\Sigma$), est supprimée. Les réponses issues du transpondeur de l'aéronef via la voie Différence (voie $\Delta$) sont détectées comme celles reçues via la voie Somme (voie $\Sigma$). Par suite, un signal: RSLS-CONT complémentaire est obtenu par la comparaison des voies Différence (voie $\Delta$) et Contrôle (voie $\Omega$) pour inhiber les réponses reçues sur lobes secondaires de la voie Différence (voie $\Delta$).

Du point de vue des modifications apportées au sous-ensemble réalisant la Gestion spatiotemporelle du radar, il convient de noter que, classiquement, la fonction de Gestion spatiotemporelle 11 se décompose en pratique en deux parties.

On distingue d'abord les moyens 17 chargés de la gestion du balayage d'antenne, ou "Scan Processing" selon la dénomination anglo-saxonne. Ces moyens ont pour fonction, de manière connue, de prédire, pour le tour d'antenne à venir, des caractéristiques des cibles, des transpondeurs, à interroger lorsque le faisceau d'antenne balaye la direction considéré. Ces prédictions sont élaborées à partir des informations acquises aux tours précédents. Ces prédictions regroupent, pour chaque transpondeur identifié, les informations prédites de position et les tâches à remplir par le radar (ELS, EHS, IFF, ...) concernant le transpondeur considéré.

On distingue ensuite les moyens assurant la fonction de gestion spatiotemporelle 11 (GST) ou "Space Time Management (STM)" selon la dénomination anglo-saxonne. Ces moyens assurent la gestion, le séquencement, dans le lobe d'antenne des opérations d'interrogation à réaliser et des opérations d'écoute associées à chaque interrogation. Ces opérations sont prédites par les moyens 17 de gestion du balayage d'antenne ("Scan Processing") et sont affinées en temps réel (pendant le passage du lobe d'antenne dans la direction azimutale pour chaque cible) par la gestion spatiotemporelle 11 ("STM") en fonction des résultats obtenus (i.e. des détections réalisées) durant la période d'écoute précédente réalisée dans le même lobe d'antenne (ré interrogation du même transpondeur si échec de la première interrogation par exemple).

Selon l'invention, la fonction de gestion spatiotemporelle 31 ("STM") comporte, outre les moyens 111 et 112 pour générer les messages d'informations à transmettre, des moyens 311 pour réaliser la gestion des voies d'émission à utiliser et en particulier pour déterminer pour chaque cible si des transactions sur la voie Différence (voie Δ) sont à réaliser.

Pour ce faire, ces moyens 311 déterminent en particulier si pour chaque aéronef attendu des transactions (émissions d'interrogations et réception de réponses) sur la voie Différence (voie Δ) sont nécessaires.

C'est en particulier le cas en fonctionnement IFF pour lequel les transactions (émissions d'interrogations et réception de réponses) sur la voie Différence (voie Δ) sont systématiquement engagées de façon à accroitre la durée d'éclairement de chaque transpondeur et par suite d'améliorer les performances d'identification du radar en présence de brouilleurs.

C'est également le cas en mode S, pour lequel la réalisation de transactions sur la voie Différence (voie Δ) est fonction du pourcentage maximum du temps d'éclairement par le lobe d'antenne correspondant à la voie Somme (voie Σ) alloué au mode S et du nombre de transactions sélectives à effectuer, tant les transactions concernant des interrogations sélectives élémentaires ou interrogation sélectives "ELS" ( pour "ELementary Surveillance" selon la dénomination anglo-saxonne) que les transactions concernant des interrogations sélectives enrichies ou interrogations sélectives "EHS" (pour "EnHanced Surveillance" selon la dénomination anglo-saxonne). Ainsi si toutes les transactions ne peuvent être effectuées dans la durée d'éclairement par le lobe d'antenne correspondant à la voie Somme (voie Σ), en tenant compte de marges d'incertitude, on réalise les transactions "EHS" relatives aux aéronefs situés en zone proche sur la voie Différence (voie Δ) tant que les aéronefs candidats aux transactions en mode "ELS" restantes ne sont pas éclairés par le lobe d'antenne correspondant à la voie Somme (voie Σ).

Pour ce faire également, ces moyens 311 déterminent en particulier si pour chaque interrogation sélective Mode S, des transactions sur la voie Différence sont à réaliser ou non.

C'est en particulier le cas, en cas d'interrogation "EHS" d'un aéronef effectuée avec succès alors que l'aéronef est éclairé par le bord d'attaque (droit) du lobe correspondant à la voie Différence droite (voie Δ): les interrogations EHS cessent alors pour cet aéronef et seules les transactions "ELS" se poursuivent et seulement sur la voie Somme (voie Σ).

C'est également le cas, en cas d'échec de transactions "ELS" par la voie Somme (voie Σ): on poursuit alors les transactions "ELS" par la voie Différence gauche (voie Δ) de façon à éviter un manque de détection (un plot moins précis est toujours préférable à une absence de plot).

Pour remplir leur fonction les moyens 311 associent les informations fournies par les moyens 17 de gestion du balayage d'antenne ("Scan Processing") aux informations de détections élaborées par le traitement de la voie Somme 141 et le traitement de la voie Différence 341. Ils exploitent par ailleurs l'information fournie par le traitement monopulse 143 pour déterminer, pour chaque détection réalisée en réception sur la voie Différence, si cette dernière correspond à un aéronef éclairé par le lobe droit (lobe en avance sur le lobe de la voie Somme correspondant à l'entrée d'un aéronef dans l'éclairement du radar) ou par le lobe gauche de la voie d'émission Différence (lobe en arrière sur le lobe de la voie Somme correspondant à la sortie d'un aéronef de l'éclairement du radar).

D'un point de vue fonctionnel, les moyens 311 demandent aux moyens 112 de Gestion d'élaborer les messages d'Interrogations des informations relatives à la voie d'émission par laquelle le message considéré est supposé être émis par le radar.

En ce qui concerne la première variante de réalisation des moyens d'émission 32 selon l'invention, variante décrite précédemment, les moyens 311 fournissent directement aux moyens d'émission associés à chaque diagramme (émetteur voie Somme et émetteur voie Différence) les messages à émettre vers la voie ou simultanément vers les voies désirées de l'antenne

Par ailleurs, en ce qui concerne la deuxième et la troisième variante de réalisation des moyens d'émission 32 selon l'invention, variantes décrites précédemment, les moyens 311 fournissent aux moyens d'émission les différents signaux de commande nécessaires pour acheminer les signaux d'émission vers la voie ou les voies désirées. Ces signaux de commande permettent ainsi d'aiguiller le signal de puissance alternativement sur l'une ou l'autre des voies d'émission ou encore sur les deux voies simultanément.

Les tableaux ci-dessous donnent des exemples de logique de commande permettant de réaliser l'aiguillage du signal de puissance dans le cas de la deuxième variante de réalisation (tableau 1) et dans le cas troisième variante de réalisation (tableau 2).

Tableau 1 : Deuxième variante de réalisation des moyens d'émission

| Cde Position S1 | Voie d'émission |
|---|---|
| 1 | Voie Somme (voie $\Sigma$) |
| 2 | Voie Différence (voie $\Delta$) |

Tableau 2: Troisième variante de réalisation des moyens d'émission

| Cde Position S1 | Cde Position S2 | Cde Position S3 | Voie d'émission |
|---|---|---|---|
| 1 | 1 | X | Voie Somme (voie $\Sigma$) |
| 1 | 2 | X | Voie Différence (voie $\Delta$) |
| 2 | X | 1-3 | Voies $\Sigma$ et $\Delta$ (mi-puissance) |

Dans le cas de la première variante de réalisation des moyens d'émission 32 selon l'invention, par simple décision d'empbi de l'un, de l'autre ou des 2 émetteurs permet les 3 configurations possibles décrites dans le tableau 2 avec en plus l'avantage que la troisième configuration, d'émission, sur les 2 voies simultanées, est faite sans perte de puissance

L'architecture selon l'invention telle que décrite précédemment permet ainsi avantageusement de tirer parti de l'existence d'une voie Différence (voie $\Delta$) de l'Antenne 16, normalement utilisée seulement en réception pour implémenter le traitement monopulse, de façon à exploiter la partie du lobe d'antenne correspondant au diagramme de la voie Différence pour effectuer des transactions avec des aéronefs alors que ceux-ci ne sont pas encore ou ne sont déjà plus éclairés par le la partie du lobe d'antenne correspondant au diagramme de la voie Somme (voie $\Sigma$). On accroît ainsi très sensiblement la durée pendant laquelle un même aéronef est éclairé par le lobe d'antenne et par suite le nombre de transactions que l'on peut effectuer à chaque passage du lobe d'antenne dans la direction (azimut) considérée. Selon l'invention, ce résultat est avantageusement obtenu, sans qu'il soit nécessaire de toucher à l'antenne elle-même donc aux moyens réalisant la formation des diagrammes hyperfréquence Somme et Différence. L'invention n'apporte donc avantageusement pas d'altération des performances radar liées principalement à l'antenne, telle que la précision par exemple.

La suite du document présente deux illustrations pratiques qui mettent en évidence, pour un fonctionnement en mode S et pour un fonctionnement en mode IFF, la façon avantageuse dont invention améliore le fonctionnement d'un radar secondaire.

Le premier exemple d'illustration se rapporte aux transactions en mode S. Dans ce mode de fonctionnement, le besoin opérationnel des radars secondaires consiste principalement, compte tenu de l'accroissement imposé des vitesses de rotation des antennes, à accroître le temps d'éclairement pour permettre de faire face à un accroissement de la densité locale d'aéronef en azimut. Autrement dit dans le mode de séquencement selon l'invention, le nombre d'aéronefs à traiter dans un temps donné s'est sensiblement accru.

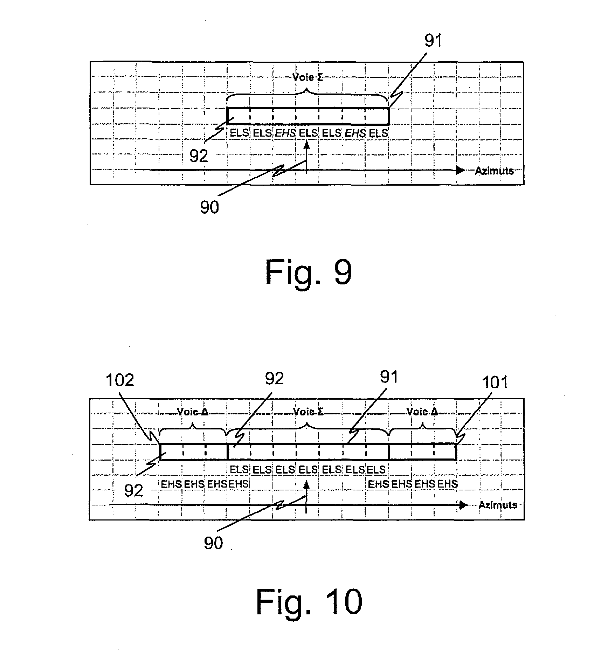

Le synoptique de la figure de la figure 9 illustre la manière dont est réalisé le séquencement des interrogations en mode S d'un radar secondaire fonctionnant dans une configuration actuelle, connue.

Dans une telle configuration, les transactions "ELS" de surveillance réalisées avec les aéronefs sont par principe réalisée, pour chaque azimut concerné 90 c'est-à-dire pour chaque azimut dans lequel la présence d'un aéronef est attendue, alors que cet azimut est situé à l'intérieur de la zone éclairée par le lobe d'antenne 91 correspondant à la voie Somme ce lobe d'antenne balayant les azimuts au rythme de la rotation de l'antenne. Ce mode opératoire est imposé par principe, dans la mesure où l'on veut réaliser une localisation précise de cet aéronef à l'aide de la fonction d'écartométrie du radar (traitement monopulse en réception sur les voies Somme (voie $\Sigma$) et Différence (voie $\Delta$).

Par ailleurs, les transactions "EHS" de d'échanges de données en mode S sont également réalisées, pour chaque azimut concerné 90, alors que cet azimut est situé à l'intérieur de la zone éclairée par le lobe d'antenne 91. Or, s'agissant d'échanges de données, la prise en compte de seule fenêtre d'éclairement constituée par le lobe d'antenne 91, correspondant seulement à la voie Somme, n'est pas justifiée par la nécessité de réaliser la localisation de l'aéronef, celle-ci étant réalisée par ailleurs. Cependant la configuration matérielle des radars actuels ne leur permet pas d'opérer de manière différente les transactions "ELS" et "EHS": elles sont nécessairement faites sur la voie Somme (voie $\Sigma$).

Par suite, chaque intervalle de temps employé pour effectuer les transactions ayant une durée donnée qui se traduit par une extension azimutale 92, le nombre transactions possibles "ELS" ou "EHS" dans la direction donnée 90 d'un aéronef donné, sept transactions dans l'illustration de la figure 9 par exemple, est limité par l'extension azimutale du seul lobe 91. Par conséquent, comme l'illustre la figure, ce mode de fonctionnement peut causer l'apparition pour un azimut donné de conflits entre tâches à exécuter, plusieurs transactions étant à réaliser dans un temps d'éclairement 91 insuffisant pour placer toutes les transactions a effectuer, de nombreux aéronefs étant présents simultanément dans un même secteur azimutal. Par suite, la priorité étant donné à la Surveillance (transactions "ELS"), l'exécution de transactions "EHS" n'est alors guère envisageable à grande distance pour un radar longue portée tournant rapidement.

Le synoptique de la figure 10 illustre sur le même exemple la manière dont est réalisé le séquencement des interrogations en mode S d'un radar secondaire fonctionnant dans une configuration correspondant à l'architecture selon l'invention.

Dans cette nouvelle configuration, les transactions "ELS" de surveillance sont toujours réalisées pour chaque azimut 90 dans lequel est localisé un aéronef, alors que cet azimut est situé à l'intérieur de la zone éclairée par le lobe d'antenne 91 correspondant à la voie Somme (voie Σ), cette configuration étant nécessaire pour réaliser la fonction d'écartométrie (traitement monopulse) qui permet de localiser précisément l'aéronef en azimut.

En revanche, dans la mesure où le radar secondaire dispose de la possibilité d'émettre en plus des interrogations par la voie Différence (voie Δ) et de traiter les réponses reçues par cette même voie Différence, des transactions "EHS" d'échanges de données en mode S peuvent alors être réalisées par l'intermédiaire de la voie Différence, c'est-à-dire lorsque l'azimut considéré est illuminé par les lobes d'antenne 101 ou 102 correspondant à la voie Différence. Par suite, pour un azimut donné, les transactions "ELS" et "EHS" sont alors réalisables, pour un aéronef donné, à des instants différents du balayage d'antenne. Par conséquent, même dans le cas d'une surveillance à longue portée exécutée par un radar qui comporte une antenne tournant rapidement, il est possible d'exécuter pour un même azimut de l'axe de l'antenne un plus grand nombre de transactions "ELS" et "EHS", ces transactions pouvant être réalisées à des instants différents de l'intervalle de temps pendant lequel l'aéronef considéré reste éclairé par le faisceau radar.

Cette extension avantageuse de la durée pendant laquelle un azimut donné est illuminé par le radar permet ainsi avantageusement d'augmenter de manière sensible le nombre de transactions qu'il est possible d'exécuter pour un azimut donné de l'axe de l'antenne. L'invention permet ainsi de faire évoluer un radar, sans modifier le diagramme de rayonnement de l'antenne, de manière à le rendre capable de répondre aux contraintes causées par l'accroissement du nombre d'aéronefs ainsi que du nombre des taches à exécuter et par l'augmentation de la vitesse de rotation de l'antenne.

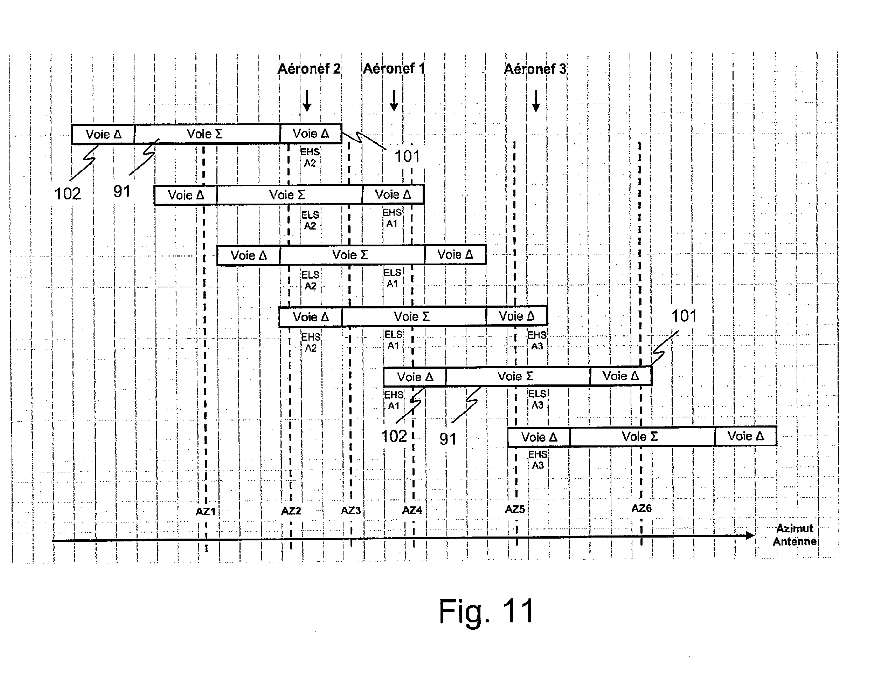

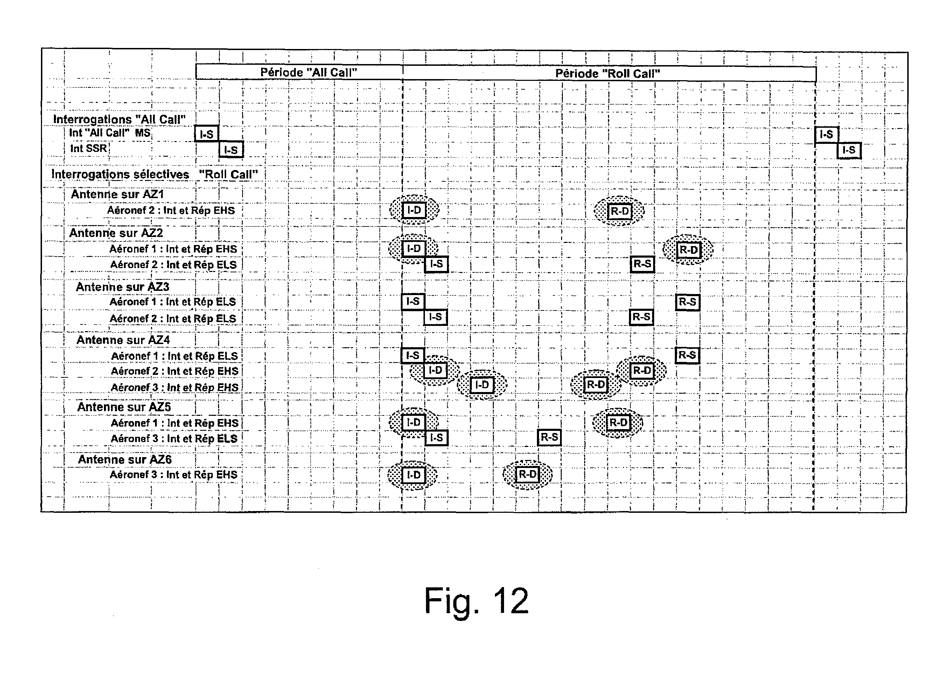

Les synoptiques des figures 11 et 12 illustrent cette propriété avantageuse au travers d'un exemple simple de situation opérationnelle dans lequel trois aéronefs sont localisés en des azimuts A1, A2 et A3 dans une zone de l'espace comprise entre un azimut AZ1 et un azimut AZ6 successivement illuminés par le diagramme d'antenne.

La figure 11 présente de manière illustrée le séquencement des différentes transactions pouvant être réalisées par le radar avec les trois aéronefs, au cours du balayage. Le faisceau d'antenne est ici représenté alors qu'il éclaire successivement sur l'aéronef 2, sur l'aéronef 1 puis sur l'aéronef 3.

La figure 12, quant à elle, met en évidence l'ensemble des transactions pouvant être réalisées avec un ou plusieurs des ces aéronefs, situés à des distances différentes, suivant l'azimut sur lequel est centré le diagramme d'antenne.

La figure 11 montre pour quelques différentes positions successives de l'axe central de l'antenne radar (AZ1, AZ2, ...AZ6) lors des périodes pour transactions (dénommées "Roll Call period selon la terminologie en anglo-saxonne) les interrogations ELS et EHS qui y sont exécutées avec les 3 aéronefs.

Dans le contexte des figures 11 et 12 on prend comme hypothèse que le secteur azimutal incluant les azimuts AZ1 à AZ6 est très dense en aéronefs à interroger avec, pour chaque aéronef un nombre important de BDS à extraire. On considère de plus qu'il est nécessaire d'effectuer plusieurs interrogations ELS pour chaque aéronef (pour des raisons liées au protocol Mode S ou du fait de simples difficultés de propagation ou de pollution électromagnétique). Par suite on se trouve dans un contexte où la voie Somme (voie Σ) est totalement utilisée pour effectuer les transactions ELS et où les transactions EHS sont donc systématiquement reportées sur la voie Différence (voie Δ). Ainsi, pour une période de transaction donnée 92 telle que celle réalisée lorsque l'antenne éclaire l'azimut Z4 le radar séquencera :

- une interrogation EHS par la voie Différence droite 101 (voie Δ) avec l'aéronef 3 localisé dans l'azimut A3 qui entre dans l'éclairement du radar,
- une interrogation ELS par la voie Somme 91 (voie Σ) avec l'aéronef 1 localisé dans l'azimut A1 placé au centre de l'éclairement du radar,
- une interrogation EHS par la voie Différence gauche 102 (voie Δ) avec l'aéronef 2 localisé dans l'azimut A2 qui sort de l'éclairement du radar,

Cette configuration prise comme exemple permet de bien mettre en évidence le caractère avantageux de l'invention qui rend possible l'exécution de certaines tâches par la voie Différence.

Le synoptique 12 détaille pour le même exemple le séquencement de ces interrogations lors des périodes de transactions 92 correspondantes aux différentes positions AZ1 à AZ6 de l'axe central de l'antenne du radar, en prenant comme hypothèse des cibles A1, A2 et A3 dont les distance respectives D1, D2 et D3 au radar sont telle que D1>D2>D3.

Il est à noter que l'optimisation du placement la fonction de placement des diverses interrogations à effectuer dans les périodes de transactions sélectives appelées, "Roll Call periods" selon la dénomination anglo-saxonne, répond à une problématique connue qui peut être résolue par toute méthode connue. Elle n'est donc pas détaillée ici.

On rappelle également, pour mémoire, que les périodes d'appel général ou "All Call Periods" selon la dénomination anglo-saxonne font partie intégrante du séquencement des échanges entre le radar et les aéronefs. Elles incorporent usuellement deux types d'interrogations "All Call": une interrogation en mode "mode S only All Call" utilisé pour acquérir les nouveaux avions mode S entrant dans la couverture radar et une interrogation destinée aux avions "SSR only" pour la surveillance des avions non mode S. A ce titre elles sont mentionnées sans plus de détail sur la figure 12.

En revanche le synoptique de la figure 12 détaille les périodes Roll Call 92 pour chaque azimuth AZ1 à AZ6 en représentant les différentes transactions:

- par avion destinataire (A1, A2, A3),
- par nature de transactions (ELS, EHS),
- par nature (Interrogation, Réponse),
- par voie de l'antenne utilisée pour la transaction (voie Somme, voie Différence).

Sur la figure 12, les transactions rendues possibles par la mise en oeuvre de l'invention, transactions réalisées par la voie Différence, sont mises en évidence par un fond tramé.

Il est à noter que les première et troisième variantes de réalisation des moyens d'émission 32 selon l'invention, offrent la possibilité d'émettre simultanément sur Somme et Différence. Il est ainsi possible de transmettre les mêmes interrogations "All Call" sur les 2 voies simultanément et ainsi accroitre le temps d'éclairement sur les cibles SSR et Mode S entrantes dans le lobe d'antenne.

Ainsi, l'accroissement du nombre d'interrogation All Call permet de gérer plus de types de mode SSR par tour d'antenne et de mieux démêler les réponses d'avions mode S en leur commandant un taux de réponse plus faible (conformément au mode de fonctionnement connu sous la dénomination anglo-saxonne "Probability Reply " ou "PR".

Par ailleurs, il est également à noter que la première variante de réalisation des moyens d'émission 32 selon l'invention, offre en outre la possibilité d'émettre, simultanément sur les voies Somme et Différence, des messages d'interrogations différents. On peut accroître encore les possibilités de fonctionnement illustrées par la figure 12 en émettant simultanément une interrogation ELS sur la voie Somme et une interrogation EHS sur la voie Différence ce qui permet alors d'interroger exactement au même moment deux avions différents, pour peu qu'ils soient suffisamment espacé en azimut. Dans ce cas, l'interrogation ISLS de la voie control est commune aux 2 interrogations Somme et Différence.

La mise en oeuvre d'une telle variante permet encore d'accroitre le nombre d'interrogations sélectives ELS ou EHS dans la même période "Roll Call" autorisant ainsi la diminution de la durée de celles-ci ce qui est requis quand l'antenne tourne vite.

Ainsi, pour la période de transaction donnée 92 telle que celle réalisée lorsque l'antenne éclaire l'azimut AZ4 le radar peut séquencer simultanément une interrogation EHS par la voie Différence droite 101 (voie Δ) avec l'aéronef 3 localisé dans l'azimut A3 qui entre dans l'éclairement du radar, et une interrogation ELS par la voie Somme 91 (voie Σ) avec l'aéronef 1 localisé dans l'azimut A1 placé au centre de l'éclairement du radar.

Le second exemple d'illustration se rapporte aux transactions en mode IFF, mode qui intéresse le monde militaire et s'applique aux interrogations des aéronefs militaires par un radar secondaire configuré pour exécuter de tels échanges. Dans ce mode de fonctionnement, le besoin opérationnel des radars secondaires consiste principalement, compte tenu de l'accroissement imposé des vitesses de rotation des antennes, à maintenir ou même accroître le temps d'éclairement de façon à réaliser des transactions de plus longue durée avec les aéronefs militaires interrogés.

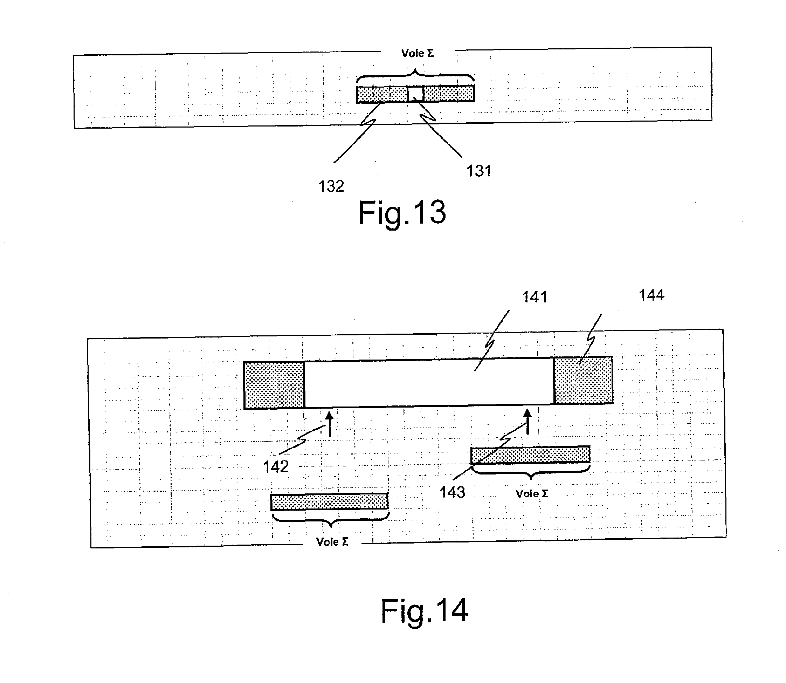

Les synoptiques des figures 13 et 14 présentent le séquencement des transactions effectuées par un radar secondaire actuel, c'est-à-dire le séquencement des interrogations effectuées par un radar secondaire dans la structure actuelle, dans le cas typique d'une désignation effectuée sur une cible, typiquement le cas d'une demande d'identification IFF d'une cible détectée par un radar primaire.

Selon les scénarios d'évolutions possibles de la cible, de l'aéronef, considérée et de sa distance au radar secondaire, la position prédite de la cible est soit connue avec précision comme dans le cas de la figure 13, la cible étant localisée dans une fenêtre de prédiction étroite 131, ou avec une forte incertitude, la cible étant alors localisée dans une large fenêtre de prédiction 141 comme dans le cas de la figure 14. Dans ce dernier cas, la cible peut notamment être positionnée soit en début soit en fin de la fenêtre de prédiction comme l'illustrent les flèches 142 et 143. Par suite, le radar commence à interroger l'aéronef dès que le diagramme 132 de la voie Somme, seule voie exploitée, intercepte la fenêtre de prédiction 131 ou 141, c'est-à-dire, ,quand l'azimut de l'axe de l'antenne qui est aussi le centre du diagramme de la voie Somme pénètre dans une zone 144 correspondant à la fenêtre de prédiction augmentée de la moitié du diagramme de la voie Somme. Puis, dès que la cible est complètement détectée, l'interrogation peut cesser.

Ainsi, comme on peut le constater, l'exploration de la fenêtre de prédiction est effectuée par la seule voie Somme. Par suite, le nombre de réponses nécessaires pour effectuer une transaction IFF ne permet pas à un radar secondaire actuel, dont l'antenne tourne rapidement, d'effectuer une identification IFF à longue portée, avec la qualité requise de réjection des brouilleurs.

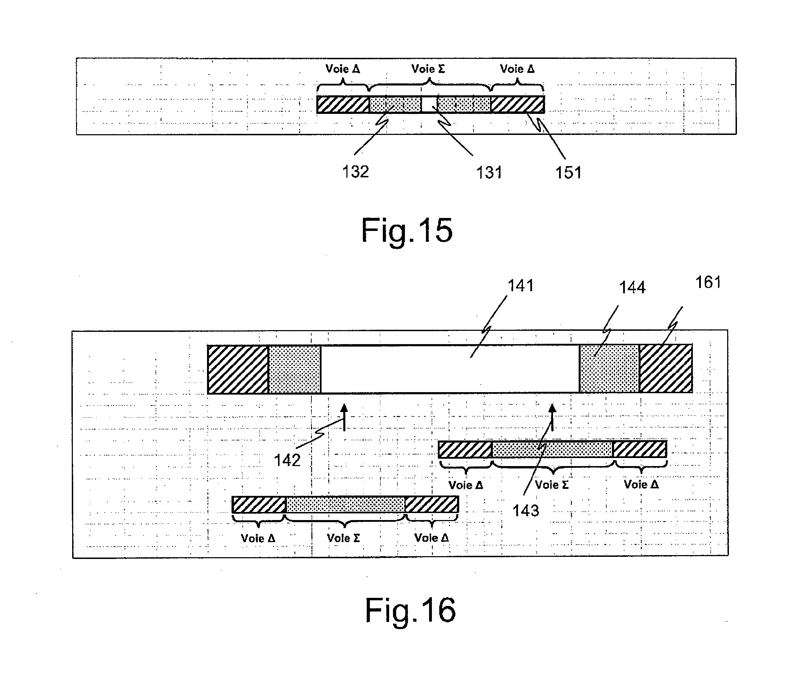

Les synoptiques des figures 15 et 16 présentent quant à eux le séquencement des transactions effectuées par un radar secondaire selon invention, dans le deux cas, déjà illustrés par les figures 13 et 14, d'une fenêtre de prédiction étroite 131 et d'une fenêtre large 141.

Comme précédemment, le radar commence à interroger l'aéronef dès que le faisceau d'antenne intercepte la fenêtre de prédiction. Cependant, le faisceau d'antenne considéré ici est celui correspondant à la fois aux voies Somme et Différence. Par suite, on commence à interroger l'aéronef dès que le faisceau d'antenne pénètre dans la fenêtre de prédiction 131 ou 141, c'est-à-dire, quand l'azimut de l'axe de l'antenne qui est aussi le centre du diagramme de la voie Somme pénètre dans une zone correspondant à la fenêtre de prédiction augmentée de la moitié du diagramme des voies Somme 132 ou 144 et Différence 151 ou 161. Puis, comme précédemment l'interrogation cesse dès que la cible est complètement détectée.

Ainsi, lorsque l'axe de l'antenne pénètre la zone 151 (ou 161) les interrogations sont émises sur la voie Différence. Puis à partir du moment où l'axe de l'antenne pénètre la zone 132 ou 144 et tant que la cible n'est pas détectée, les interrogations sont alors émises sur la voie Somme pour la seconde variante de réalisation des moyens d'émission 32 et simultanément sur les voies Somme et Différence pour les première et troisième variantes de réalisation des moyens d'émission 32. Quand la cible est enfin détectée, les interrogations sont transmises, comme le montre la figure 16, soit sur la voie Somme soit sur la voie Différence en fonction de l'azimut de la cible qui est alors connu précisément. L'exemple de la figure 16 présente le cas d'une cible 143 en début de fenêtre de prédiction et une autre 142 en fin de fenêtre de prédiction.

Il est à noter que, comme l'illustre les figure 15 et 16, quelle que soit la taille de la fenêtre de prédiction, la durée pendant laquelle il est possible d'interroger un aéronef et de recevoir sa réponse, une fois localisé précisément en azimut, est ainsi très sensiblement allongée, ce qui rend possible, pour un radar secondaire selon l'invention, d'effectuer une identification IFF à longue portée, de bonne qualité, même pour une grande vitesse de rotation de l'antenne.

Il est encore à noter que, selon l'invention, la fonction de gestion spatiotemporelle 31 tient compte des mesures des puissances des réponses reçues les voies Somme et Différence, puissances mesurées par les moyens de traitement du signal 14, pour déterminer sur quelle voie l'émission des interrogations doit être réalisée à un instant donné afin de profiter de la puissance maximale rayonnée sur la cible (interrogations par la voie Différence puis par la voie Somme en début de fenêtre et réciproquement par la voie Somme puis par la voie Différence en fin de fenêtre).

Il est à noter également qu'en cas de chevauchement entre zones de désignation d'interrogation IFF, selon la variante de réalisation des moyens d'émission utilisée pour mettre en oeuvre l'invention, il est possible de gérer partiellement ou complètement un tel chevauchement :

Dans le cas d'un radar secondaire selon l'invention, le traitement des chevauchements est différent en fonction de la variante de réalisation considérée.

Avec la seconde variante de réalisation, illustrée par la figure 7, à un instant donné l'émission des interrogations est réalisée soit sur la voie Somme soit sur la voie Différence. Par conséquent, en cas de chevauchement en azimut, on privilégie l'interrogation devant être émise sur la voie Somme. Cependant ceci ramène alors partiellement le traitement des cibles chevauchantes à ce qui est réalisé dans un radar actuel ne comportant pas l'invention.

Avec la troisième variante de réalisation, illustrée par la figure 8, dans la zone de chevauchement les interrogations si elles sont de même types peuvent être émises sur les voies Somme et Différence, avec une puissance diminuées de moitié pour chaque voie, cependant.

Avec la première variante de réalisation, illustrée par la figure 6, pour deux fenêtres prédictives distinctes qui se chevauchent, les interrogations peuvent être gérées indépendamment en utilisant simultanément les deux voies d'émission Somme et Différence, et ce, en disposant avantageusement d'une puissance maximale sur chacune des voies. Par suite, les combinaisons d'utilisation des voies Somme et Différence, résumées dans le tableau 3, seraient alors les plus courantes.

Tableau 3 Combinaisons d'utilisation des voies Somme et Différence,

| Voie Somme | Voie Différence | COMMENTAIRES | MODES EXPLOITES |
|---|---|---|---|
| - | X | pour détection cible prédite débutant entree dans le faisceau | SSR, IFF, MS_EHS |

(suite)

| Voie Somme | Voie Différence | COMMENTAIRES | MODES EXPLOITES |
|---|---|---|---|
| X | X | pour détection cible prédite entrant dans le faisceau centre lobe | SSR, IFF, MS EHS |
| X | - | pour détection et localisation de la cible en centre lobe | SSR, IFF, MS_EHS MS_ELS |
| X | X | pour détection cible sortant du faisceau centre lobe | SSR, IFF, MS_EHS |
| - | X | pour détection cible sortant du faisceau | SSR, IFF, MS EHS |
| X | X | Pour détecter une cible prédite avec incertitude en azimut | SSR, IFF |

**Revendications**

1. Radar secondaire du type comportant une antenne (16) présentant un diagramme de rayonnement formant une voie Somme, $\Sigma$, un diagramme de rayonnement formant une voie Différence, $\Delta$, et un diagramme formant une voie Contrôle, $\Omega$, des moyens (31) pour générer des messages d'interrogations "voie Somme" et des messages d'interrogation ISLS "voie Contrôle", des moyens (32) pour émettre ces messages respectivement par les voies Somme et Contrôle de l'antenne ainsi que des moyens pour assurer la réception (13) et le traitement (34) des signaux radioélectriques reçues par les voies Somme, Contrôle et Différence, configurés pour détecter les réponses d'aéronefs sur les signaux reçues par la voie Somme de l'antenne et réaliser un traitement monopulse et un traitement SLS sur ces réponse en utilisant les signaux reçus par les voies Différence et Contrôle de l'antenne; **caractérisé en ce que** les moyens pour générer des messages d'interrogations (31) sont configurés pour générer également des messages d'interrogations "voie Différence"; que les moyens d'émission sont configurés pour pouvoir émettre ces messages par la voie Différence de l'antenne, les moyens pour générer des messages d'interrogations (31) comportant des moyens (311) pour gérer la transmission de chaque message d'interrogation vers la voie d'émission correspondante; et que les moyens pour assurer la réception (13) et le traitement (34) des signaux radioélectriques reçues par les voies Somme, Contrôle et Différence sont configurés (341) pour détecter les réponses d'aéronefs sur les signaux reçues par la voie Différence de l'antenne, les moyens étant configurés et agencés de sorte que, pour un instant donné, les transactions entre le radar et un aéronef donné peuvent être effectuées soit par la voie Somme du lobe d'antenne, soit par la voie Différence, selon la position de la cible dans le lobe d'antenne à l'instant considéré, soit par les deux voies.

2. Radar selon la revendication 1, **caractérisé en ce que** les moyens (31) pour générer les messages d'interrogations étant configurés pour pouvoir délivrer simultanément aux moyens d'émission (32) deux messages identiques ou distincts, les moyens d'émission (32) comportent deux voies d'émission distinctes, une voie d'émission (121) étant dédiée à l'émission d'un des messages par la voie Somme du lobe d'antenne et l'autre (321) étant dédiée à l'émission de l'autre message sur la voie Différence du même lobe d'antenne.

3. Radar selon la revendication 1, **caractérisé en ce que** les moyens (31) pour générer les messages d'interrogations étant configurés pour pouvoir délivrer alternativement des messages "voie Somme" et des messages "voie Différence" aux moyens d'émission (32), les moyens d'émission (32) comportent des moyens uniques (121) pour transformer le message délivré en un signal radioélectrique et des moyens de commutation (71) pour diriger le signal produit sur celle des voies d'antenne, voie Somme ou Voie Différence, qui correspond à la nature du message délivré.

4. Radar selon la revendication 1, **caractérisé en ce que** les moyens (31) pour générer les messages d'interrogations étant configurés pour pouvoir délivrer alternativement ou simultanément des messages identiques "voie Somme" et des messages "voie Différence" aux moyens d'émission (32), les moyens d'émission (32) comportent des moyens unique (121) pour transformer le message délivré en un signal radioélectrique ainsi que des moyens de commutation (81, 82, 83 et 84) configurés pour diriger le signal produit soit sur la voie Somme de l'antenne, soit sur la voie Différence, soit sur les deux voies.

**Patentansprüche**

1. Sekundäres Radar des Typs mit einer Antenne (16) mit einem Strahlungsdiagramm, das einen Summenkanal $\Sigma$ bildet, einem Strahlungsdiagramm, das einen Differenzkanal $\Delta$ bildet und einem Diagramm, das einen Steuerkanal $\Omega$ bildet, Mittel (31) zum Erzeugen von "Summenkanal"-Abfragenachrichten und von ISLS "Steuerkanal"-Abfragenachrichten, Mittel (32) zum Übertragen dieser Nachrichten über den Summen- bzw. den Steuerkanal der Antenne sowie Mittel zum Gewährleisten des Empfangs (13) und der Verarbeitung (34) von radioelektrischen Signalen, die von den Summen-, Steuer- und Differenzkanälen empfangen werden, konfiguriert zum Erkennen der Antworten vom Luftfahrzeug auf die vom Summenkanal der Antenne empfangenen Signale und zum Durchführen einer Monopulsverarbeitung und einer SLS-Verarbeitung dieser Antworten mit den Signalen, die vom Differenz- und vom Steuerkanal der Antenne empfangen werden,
**dadurch gekennzeichnet, dass** das Abfragenachrichtenerzeugungsmittel (31) so konfiguriert ist, dass es ferner "Differenzkanal"-Abfragenachrichten erzeugt; dass die Übertragungsmittel so konfiguriert sind, dass sie diese Nachrichten über den Differenzkanal der Antenne übertragen können, wobei das Abfragenachrichtenerzeugungsmittel (31) Mittel (311) zum Verwalten der Übertragung jeder Abfragenachricht zu dem entsprechenden Übertragungskanal umfasst, und dass das Mittel zum Gewährleisten des Empfangs (13) und der Verarbeitung (34) von von den Summen-, Steuer- und Differenzkanälen empfangenen radioelektrischen Signalen so konfiguriert (341) ist, dass es die Antworten vom Luftfahrzeug auf die vom Differenzkanal der Antenne empfangenen Signale erkennt, wobei die Mittel so konfiguriert und ausgelegt sind, dass für einen gegebenen Augenblick die Transaktionen zwischen dem Radar und einem gegebenen Luftfahrzeug entweder über den Summenkanal der Antennenkeule oder über den Differenzkanal durchgeführt werden können, je nach der Position des Ziels in der Antennenkeule zu dem betrachteten Augenblick oder durch die beiden Kanäle.

2. Radar nach Anspruch 1, **dadurch gekennzeichnet, dass**, da das Mittel (31) zum Erzeugen der Abfragenachrichten so konfiguriert ist, dass es gleichzeitig zwei identische oder getrennte Nachrichten zum Übertragungsmittel (32) liefern kann, das Übertragungsmittel (32) zwei getrennte Übertragungskanäle umfasst, einen Übertragungskanal (121), der zum Übertragen von einer der Nachrichten über den Summenkanal der Antennenkeule dediziert ist, und den anderen (321), der zum Übertragen der anderen Nachricht auf dem Differenzkanal derselben Antennekeule dediziert ist.

3. Radar nach Anspruch 1, **dadurch gekennzeichnet, dass**, da das Mittel (31) zum Erzeugen der Abfragenachrichten so konfiguriert ist, dass es alternativ "Summenkanal"-Nachrichten und "Differenzkanal"-Nachrichten zum Übertragungsmittel (32) liefern kann, das Übertragungsmittel (32) einzelne Mittel (121) zum Umwandeln der gelieferten Nachricht in ein Funksignal und Schaltmittel (71) zum Richten des erzeugten Signals zu demjenigen Antennenkanal umfasst, d.h. dem Summenkanal oder dem Differenzkanal, der der Natur der gelieferten Nachricht entspricht.

4. Radar nach Anspruch 1, **dadurch gekennzeichnet, dass**, da das Mittel (31) zum Erzeugen der Abfragenachrichten so konfiguriert ist, dass es identische "Summenkanal"-Nachrichten und "Differenzkanal"-Nachrichten abwechselnd oder gleichzeitig zu dem Übertragungsmittel (32) liefern kann, das Übertragungsmittel (32) einzelne Mittel (121) zum Umwandeln der gelieferten Nachricht in ein Radiosignal sowie Schaltmittel (81, 82, 83 und 84) umfasst, die zum Richten des produzierten Signals entweder zum Summenkanal der Antenne oder zum Differenzkanal oder zu beiden Kanälen konfiguriert ist.

**Claims**

1. A secondary radar of the type comprising an antenna (16) having a radiation pattern forming a Sum channel $\Sigma$, a radiation pattern forming a Difference channel $\Delta$ and a pattern forming a Control channel $\Omega$, means (31) for generating "Sum channel" interrogation messages and ISLS "Control channel" interrogation messages, means (32) for transmitting these messages via the Sum and Control channels of the antenna, respectively, as well as means for ensuring the reception (13) and the processing (34) of radio signals received by the Sum, Control and Difference channels, configured to detect the responses from aircraft to the signals received by the Sum channel of the antenna and to carry out a monopulse processing and SLS processing of these responses using the signals received by the Difference and Control channels of the antenna,
**characterised in that** said means (31) for generating interrogation messages are configured so as to further generate "Difference channel" interrogation messages, and that the transmission means are configured so as to be able to transmit these messages via the Difference channel of the antenna, said means (31) for generating interrogation messages comprising means (311) for managing the transmission of each interrogation message toward the corresponding transmission channel, and that the means for ensuring the reception (13) and the processing (34) of radio signals received by the Sum, Control and Difference channels are configured (341) so as to detect the responses from aircraft to the signals received by the Difference channel of the antenna, said means being configured and arranged so that, for a given instant, the transactions between the radar and a given aircraft can be carried out either via the Sum channel of the antenna lobe or via the Difference channel, depending on the position of the target in the antenna lobe at the considered instant, or by the two channels.

2. The radar according to claim 1, **characterised in that** the means (31) for generating the interrogation messages being configured so as to be able to simultaneously deliver two identical or distinct messages to the transmission means (32), the transmission means (32) comprise two distinct transmission channels, with one transmission channel (121) being dedicated to the transmission of one of the messages via the Sum channel of the antenna lobe and the other (321) being dedicated to the transmission of the other message on the Difference channel of the same antenna lobe.

3. The radar according to claim 1, **characterised in that** the means (31) for generating the interrogation messages being configured so as to be able to alternately deliver "Sum channel" messages and "Difference channel" messages to the transmission means (32), the transmission means (32) comprise single means (121) for converting the delivered message into a radio signal and switching means (71) for directing the signal produced to whichever antenna channel, i.e. the Sum channel or Difference channel, corresponds to the nature of the delivered message.

4. The radar according to claim 1, **characterised in that** said means (31) for generating the interrogation messages being configured so as to be able to alternately or  simultaneously deliver identical "Sum channel" messages and "Difference channel" messages to the transmission means (32), the transmission means (32) comprise single means (121) for converting the delivered message into a radio signal, as well as switching means (81, 82, 83 and 84) configured to direct the signal produced either to the Sum channel of the antenna or to the Difference channel, or to both channels.

Fig.1

2_A Limitation des échanges à l'émission

2_B Limitation des échanges en réception

# Fig. 2

Fig. 3

4_A Limitation des échanges à l'émission

4_B Limitation des échanges en réception

Fig. 4

**Emission** 122

Interrogations ISLS → Signal voie Ω

Interrogations voie Σ → Signal voie Σ

12 121

## Fig. 5

**Emission** 122

Interrogations ISLS → Signal voie Ω

121

Interrogations voie Σ → Signal voie Σ

Interrogations voie Δ → Signal voie Δ

61

32 321

## Fig. 6

**Fig. 7**

**Fig. 8**

Fig. 9

Fig. 10

Fig. 11

Fig. 12

Fig.13

Fig.14

Fig.15

Fig.16

**EP 2 431 762 B1**

## RÉFÉRENCES CITÉES DANS LA DESCRIPTION

**Documents brevets cités dans la description**

- FR 2918804
- EP 0577520 A
- US 5302953 A
- US 5218365 A
- EP 0053512 A
- FR 0311893